# EUROPEAN PATENT APPLICATION

(11) **EP 4 033 410 A1**
(43) Date of publication of application: **27.07.2022**
(21) Application number: 20866229.6
(22) Date of filing: 28.08.2020
(51) Int. Cl.: G06N 3/04

(54) **ANTICIPATORY LEARNING METHOD AND SYSTEM ORIENTED TOWARDS SHORT-TERM TIME SERIES PREDICTION**

(30) Priority: 17.09.2019 CN 201910876022
(71) Applicant: Center for Excellence in Molecular Cell Science, Chinese Academy of Sciences, Shanghai 200031 (CN); Sun Yat-Sen University, Guangzhou, Guangdong 510275 (CN)
(72) Inventor: CHEN, Luonan, Shanghai 200031 (CN); CHEN, Chuan, Guangzhou, Guangdong 510275 (CN)
(74) Representative: Modiano, Gabriella Diana
(86) International application number: PCT/CN2020/112070
(87) International publication number: WO 2021/052140

(57) **Abstract**

The present invention discloses an anticipated learning method and system for short-term time series prediction, which solves the prediction problem of short-term high-dimensional time series and realizes accurate multi-step prediction of short-term high-dimensional data. The technical proposal is as follows: selecting a variable for prediction from time series data, performing anticipated learning for short-term time series prediction on basis of two trained neural network models, and finally outputting a portion of the selected prediction variables that needs to be predicted.

## Description

### Technical Field

The present invention relates to the field of time series prediction, in particular to an anticipated learning method and system for short-term time series prediction.

### Background

Predicting the future value of time series data is a challenging task, especially when only a few samples with high-dimensional variables are available. In fact, these data are considered unpredictable because there is little statistical information. However, such data have been widely used in many fields (e.g. physics, economics, biology, medicine, etc.). Therefore, high requirements for accuracy and reliability of prediction are put forward. Any innovative progress in this aspect has broad significance.

The conventional time series prediction methods such as ARIMA, robust regression, exponential smoothing and other statistical methods, and the machine learning methods such as long short-term memory (LSTM) networks, all need time series with enough long-term measurement. However, due to the lack of information, there is no effective method to predict short-term time series. In addition, short-term high-dimensional time series has attracted more and more attention in various fields, while the prediction of short-term high-dimensional time series is rarely studied.

Therefore, how to solve the prediction problem of short-term high-dimensional time series has become an urgent problem in the field.

### Summary

A brief overview of one or more aspects is given below to provide a basic understanding of these aspects. This overview is not an exhaustive overview of all envisaged aspects and is neither intended to identify the key or decisive elements of all aspects nor to attempt to define the scope of any or all aspects. The sole purpose thereof is to give some concepts of one or more aspects in a simplified form as an order of a more detailed description given later.

The purpose of the present invention is to solve the above problem by providing an anticipated learning method and system for short-term time series prediction, which can solve the prediction problem of short-term high-dimensional time series and realize accurate multi-step prediction of short-term high-dimensional data. Experiments show that this method has amazing prediction accuracy in actual data prediction.

The technical proposal of the present invention is that the present invention discloses an anticipated learning method and system for short-term time series prediction, comprising:
step 1: selecting a variable for prediction from time series data and record it as *x,* and then selecting a data segment with a duration of *tₜᵣₐᵢₙ* from a data set as a training set *data,* wherein corresponding x[0: *tₜᵣₐᵢₙ*] is used as a label set to predict a future variable *x*[*tₜᵣₐᵢₙ*: *tₜᵣₐᵢₙ* + *t_{prediction}*] with a duration of *t_{prediction}*;
step 2: executing subsequent steps to cyclically process a current predicted point *x*[*tₜᵣₐᵢₙ* + *num]* , wherein *num* represents a subscript of the variable predicted this time, and an initial value of the *num* is made 0;
step 3: using the training set and the label set to train two neural networks *ϕ*_{1+*num*} and *ϕ*₂₊ₙᵤₘ , wherein the training set *train*₁ of the neural network *ϕ*_{1+*num*} is *data*[1: *tₜᵣₐᵢₙ* - 1], the training set *train*₂ of the neural network *ϕ*_{2+*nnm*} is *data*[0: *tₜᵣₐᵢₙ* - 2], the label sets *label* of the two neural networks are both *x[2* + *num: tₜᵣₐᵢₙ*]*,* and obtaining that the trained output of the neural network *ϕ*_{1+*num*} is *output*₁*,* the trained output of the neural network *ϕ*_{2+*num*} is *output*₂, and a loss function of the two neural networks are:
   *loss function* = *mean square error in self training* + *α* *
   *(mean square errors of output*₁ *and output*₂),
   wherein *α* is a hyper parameter;
step 4: performing prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network ϕ_{2+*num*}, by the two neural networks trained in the step 3 to respectively obtain prediction results *x*_{*prediction*1} and *x*_{*prediction*2} , finally taking an average value to get a prediction result of this time *x*[*tₜᵣₐᵢₙ* + num] = (*x*_{*prediction*1} + *x*_{*prediction*2})/2, adding the prediction result to the end of the label *x*[0: *tₜᵣₐᵢₙ*] of the training set to obtain *x[0: tₜᵣₐᵢₙ* + num + 1], taking *x*[0: *tₜᵣₐᵢₙ* + *num* + 1] as the label for a next round of training, then making *num* = *num* + 1 and repeating the cyclic processing of the steps 3~4, and jumping out of the loop until *num* = *t_{prediction}* - 1;
step 5: obtaining the prediction value *x*[*tₜᵣₐᵢₙ*: *tₜᵣₐᵢₙ* + *t_{prediction}*] with the duration of *t_{prediction}* and finishing the prediction, wherein the prediction value *x*[*tₜᵣₐᵢₙ*: *tₜᵣₐᵢₙ* + *t_{prediction}*] with the duration of *t_{prediction}* represents the prediction result of a time series prediction task.

According to an embodiment of the anticipated learning method for short-term time series prediction of the present invention, the data set comprises a synthetic data set and a real data set.

According to an embodiment of the anticipated learning method for short-term time series prediction of the present invention, the two neural networks *ϕ*_{1+*num*} and *ϕ*_{2+*num*} are multilayer simple neural network models with a layer for sampling processing in an input layer.

The present invention also discloses an anticipated learning system for short-term time series prediction, comprising:
a preprocessing module, selecting a variable for prediction from time series data and record it as *x,* then selecting a data segment with a duration of *tₜᵣₐᵢₙ* from a data set as a training set *data,* wherein corresponding x[0: *tₜᵣₐᵢₙ*] is used as a label set to predict a future variable *x[tₜᵣₐᵢₙ*: *tₜᵣₐᵢₙ* + *t_{prediction}*] with a duration of *t_{prediction},* and executing subsequent steps to cyclically process a current predicted point *x*[*tₜᵣₐᵢₙ* + num] , wherein *num* represents a subscript of the variable predicted this time, and an initial value of the *num* is made 0;
a neural network training module, using the training set and the label set to train two neural networks *ϕ*_{1+*num*} and *ϕ*_{2+*num*}, wherein the training set *train*₁ of the neural network *ϕ*_{1+*num*} is *data*[1: *tₜᵣₐᵢₙ* - 1], the training set *train*₂ of the neural network *ϕ*_{2+*num*} is *data*[0: *tₜᵣₐᵢₙ* - 2], the label sets *label* of the two neural networks are both *x*[2 + *num: tₜᵣₐᵢₙ*]*,* and obtaining that the trained output of the neural network *ϕ*_{1+*num*} is *output*₁*,* the trained output of the neural network *ϕ*_{2+*nnm*} is *output*₂*,*and a loss function of the two neural networks are:
   *loss function* = *mean square error in self training* + *α* *
   *(mean square errors of output*₁ *and output*₂*),*
   wherein *α* is a hyper parameter;
a prediction module, performing prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network *ϕ*_{2*+num,*} by the two neural networks trained in the neural network training module to respectively obtain prediction results *x*_{*prediction*1} and *x*_{*prediction*2} , finally taking an average value to get a prediction result of this time *x*[*tₜᵣₐᵢₙ* + num] = (*x*_{*prediction*1} + *x*_{*prediction*2}*)*/2 , adding the prediction result to the end of the label *x*[0: *tₜᵣₐᵢₙ*] of the training set to obtain *x*[0: *tₜᵣₐᵢₙ* + num + 1], taking *x*[0: *tₜᵣₐᵢₙ* + *num* + 1] as the label for a next round of training, then making *num* = *num* + 1 and repeating the cyclic processing of the neural network training module and the prediction module, jumping out of the loop until *num* = *t_{prediction}* - 1, obtaining the prediction value *x*[*tₜᵣₐᵢₙ: tₜᵣₐᵢₙ* + *t_{prediction}*] with the duration of *t_{prediction}* and finishing the prediction, wherein the prediction value *x*[*tₜᵣₐᵢₙ*: *tₜᵣₐᵢₙ* + *t_{prediction}*] with the duration of *t_{prediction}* represents the prediction result of a time series prediction task.

According to an embodiment of the anticipated learning system for short-term time series prediction of the present invention, the data set comprises a synthetic data set and a real data set.

According to an embodiment of the anticipated learning system for short-term time series prediction of the present invention, the two neural networks *ϕ*_{1+*num*} and *ϕ*_{2+*num*} are multilayer simple neural network models with a layer for sampling processing in an input layer.

Compared with the prior art, the present invention has the following beneficial effects: the proposal of the present invention is that selecting a variable for prediction from obtained time series data, performing anticipated learning for short-term time series prediction on basis of two trained neural network models, and finally outputting a portion of the selected prediction variables that needs to be predicted.

Compared with the prior art, the present invention can achieve the following technical effects:
(1) The present invention firstly proposes a new neural network of model free machine learning or anticipated learning, called anticipated learning machine (ALM), to realize the accurate multi-step prediction of short-term high-dimensional data, which has amazing accuracy in the prediction of actual data. Compared with the current statistical based machine learning methods that need a lot of data to experience almost all situations, ALM transforms the information of all measured high-dimensional variables into the dynamics of any target variables by learning an embedded graph on basis of nonlinear dynamics, thereby opening up a new way for dynamic based machine learning or "intelligent" anticipated learning (a new paradigm of artificial intelligence).
(2) The high performance of ALM has been verified in synthetic data sets (time-varying coupled Lorentz system) and various real-world data sets from micro to macro levels (such as gene expression data, plankton data, meteorological data, stock index data, traffic data, typhoon data and satellite cloud image data). Experiments show that the performance of ALM is significantly better than any excellent method proposed in the recent literature (by comparing all 12 available methods including neural network or deep learning methods).

### Brief Description of the Drawings

After reading the detailed description of the embodiments of the present disclosure in combination with the following drawings, the above features and advantages of the present invention can be better understood. In the drawings, the components are not necessarily drawn to scale, and components with similar relevant characteristics or features may have the same or similar reference numerals.
Fig. 1 shows a flowchart of an embodiment of the anticipated learning method for short-term time series prediction according to the present invention.
Fig. 2 shows a schematic diagram of an embodiment of the anticipated learning system for short-term time series prediction according to the present invention.

### Detailed Description of Embodiments

The present invention is described in detail below in combination with the accompanying drawings and specific embodiments. Note that the aspects described below in connection with the accompanying drawings and specific embodiments are only exemplary and should not be understood as limiting the scope of protection of the present invention.

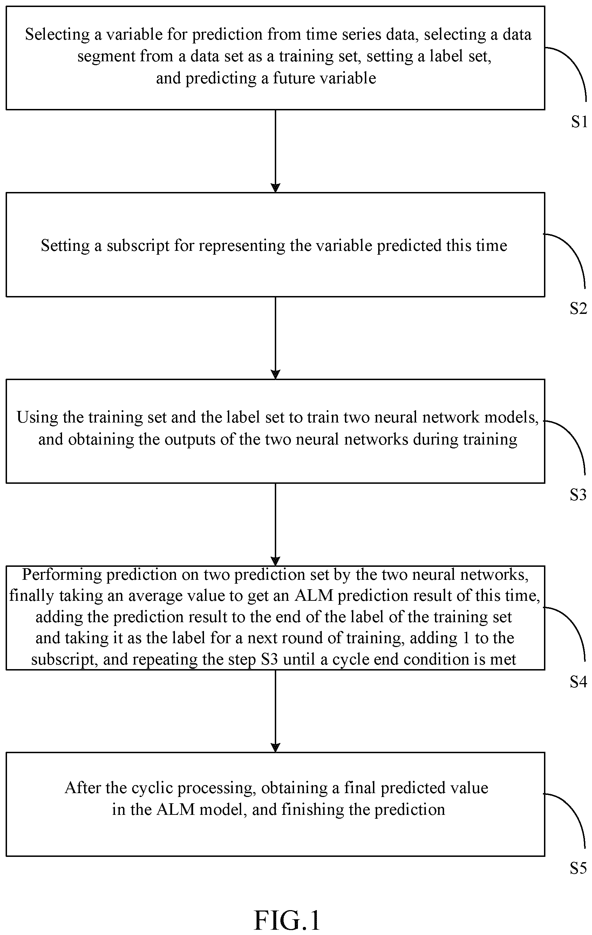

Fig. 1 shows a flowchart of an embodiment of the anticipated learning method for short-term time series prediction according to the present invention. Referring to Fig. 1, the specific implementation steps of the anticipated learning method according to this embodiment are detailed described as follows.

Step S1: randomly selecting a variable for prediction from time series data and recording it as x. The time series data is a data sequence recorded in chronological order by the same unified index.

Then selecting a data segment with a duration of *tₜᵣₐᵢₙ* from a data set as a training set *data,* wherein corresponding *x*[0: *tₜᵣₐᵢₙ*] is used as a label set to predict a future variable *x*[*tₜᵣₐᵢₙ*: *tₜᵣₐᵢₙ* + *t_{prediction}*] with a duration of *t_{prediction} .* Wherein the data set used in the present invention comprises a synthetic data set and a real data set. Wherein the synthetic data set is a time-varying coupled Lorentz system, which is generated by a definition of Lorentz system, and the real data set comes from real time series data in various fields of life. For example, rat gene data set, plankton data set, ground ozone level data set, etc.

Step S2: making *num* = 0. This variable represents a subscript of the variable predicted this time. For example, *num* = 0 indicates that the prediction point of this time is x[*tₜᵣₐᵢₙ* + *num*], i.e. *x*[*tₜᵣₐᵢₙ* + 0].

Step S3: using the training set and the label set to train two neural network models, referred to as *ϕ*_{1+*num*} and *ϕ*₂₊ₙᵤₘ, wherein the training set *train*₁ of the neural network *ϕ*_{1+*num*} is *data*[1: *tₜᵣₐᵢₙ* - 1], the training set *train*₂ of the neural network *ϕ*_{2+*num*} is *data*[0: *tₜᵣₐᵢₙ* - 2], and the label sets *label* of the two neural networks are both *x*[2 + *num: tₜᵣₐᵢₙ*]*,* and obtaining that the trained output of the neural network *ϕ*_{1+*num*} is *output*₁*,* the trained output of the neural network *ϕ*_{2+*nnm*} is *output*₂*,*and a loss function of the two neural networks are:
*loss function* = *mean square error in self training* + *α* *
*(mean square errors of output*₁ *and output*₂*),*
wherein *α* is a hyper parameter.

The two neural network models *ϕ*_{1+*num*} and *ϕ*_{2+*num*} according to this embodiment are multilayer simple neural network models, wherein an input layer needs a dropout layer for sampling processing, and the rest of the networks can be defined according to needs. The hyper parameter *α* in the neural networks can be adjusted according to needs.

Step S4: performing prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network *ϕ*₂*₊ₙᵤₘ,* by the two neural networks trained above to respectively obtain prediction results *x*_{*prediction*1} and *x*_{*prediction*2}*,* finally taking an average value to get an anticipated learning machine (ALM) prediction result of this time *x*[*tₜᵣₐᵢₙ* + *num]* = (*x*_{*prediction*1} + *x*_{*prediction*2}*)*/*2 .* Adding the prediction result to the end of the label *x*[0: *tₜᵣₐᵢₙ*] of the training set to obtain *x*[0: *tₜᵣₐᵢₙ* + num + 1], and taking it as the label for a next round of training. Making *num* = *num* + 1, and repeating the step S3 until *num* = *t_{prediction}* - 1.

Step S5: during the cycle of *num* from 0 to *t_{prediction}* - 1, obtaining the predicted value *x*[*tₜᵣₐᵢₙ: tₜᵣₐᵢₙ* + *t_{prediction}*] with the duration of *t_{prediction}* in the ALM model, and finishing the prediction, wherein the prediction value with the duration of *t_{prediction}* represents the prediction result of a time series prediction task according to this embodiment, and a prediction effect of the model can be obtained by comparing the result with a real result.

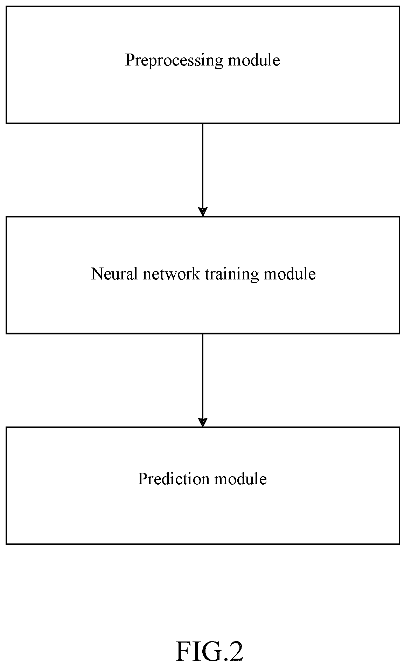

Fig. 2 shows the principle of an embodiment of the anticipated learning system for short-term time series prediction according to the present invention. Referring to Fig. 2, the anticipated learning system for short-term time series prediction according to the embodiment comprises a preprocessing module, a neural network training module and a prediction module.

The preprocessing module is configured to select a variable for prediction from time series data and record it as x, then select a data segment with a duration of *tₜᵣₐᵢₙ* from a data set as a training set *data,* wherein corresponding *x*[0: *tₜᵣₐᵢₙ*] is used as a label set to predict a future variable *x*[*tₜᵣₐᵢₙ: tₜᵣₐᵢₙ* + *t_{prediction}*] with a duration of *t_{prediction};* and execute a subsequent step to cyclic process a current predicted point *x*[*tₜᵣₐᵢₙ* + num] , wherein *num* represents a subscript of the variable predicted this time, and an initial value of the *num* is made 0.

The neural network training module is configured to use the training set and the label set to train two neural networks *ϕ*_{1+*num*} and *ϕ*₂₊ₙᵤₘ, wherein the training set *train*₁ of the neural network *ϕ*_{1+*num*} is *data*[1: *tₜᵣₐᵢₙ* - 1], the training set *train*₂ of the neural network *ϕ*_{2+*num*} is *data*[0: *tₜᵣₐᵢₙ* - 2], and the label sets *label* of the two neural networks are both *x[2* + *num: tₜᵣₐᵢₙ*]*,* and obtain that the trained output of the neural network *ϕ*_{1+*num*} is *output*₁*,* the trained output of the neural network *ϕ*_{2+*num*} is *output*₂*,*and a loss function of the two neural networks are:
*loss function* = *mean square error in self training* + *α* *
*(mean square errors of output*₁ *and output*₂),
wherein *α* is a hyper parameter.

The prediction module is configured to perform prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network *ϕ*₂₊*ₙᵤₘ,* by the two neural networks trained in the neural network training module to respectively obtain prediction results *x*_{*prediction*1} and *x*_{*prediction*2}*,* finally take an average value to get a prediction result of this time *x*[*tₜᵣₐᵢₙ* + *num]* = (*x*_{*prediction*1} + *x*_{*prediction*2}*)*/2*,* add the prediction result to the end of the label *x*[0: *tₜᵣₐᵢₙ*] of the training set to obtain *x*[0: *tₜᵣₐᵢₙ* + num + 1], take *x*[0: *tₜᵣₐᵢₙ* + *num* + 1] as the label for a next round of training, then make *num* = *num* + 1 and repeat the cyclic processing of the neural network training module and the prediction module, jump out of the loop until *num* = *t_{prediction}* - 1 , obtain the prediction value *x*[*tₜᵣₐᵢₙ*: *tₜᵣₐᵢₙ* + *t_{prediction}*] with the duration of *t_{prediction}* and finish the prediction, wherein the prediction value *x*[*tₜᵣₐᵢₙ: tₜᵣₐᵢₙ* + *t_{prediction}*] with the duration of *t_{prediction}* represents the prediction result of a time series prediction task.

Although the above methods are illustrated and described as a series of actions to simplify the explanation, it should be understood and appreciated that these methods are not limited by the order of actions, because according to one or more embodiments, some actions may occur in different orders and/or concurrently with other actions from those illustrated and described herein or not illustrated and described herein but understandable to those skilled in the art.

Those skilled in the art will further appreciate that various illustrative logic blocks, modules, circuits and algorithm steps, described in connection with the embodiments disclosed herein, may be implemented as electronic hardware, computer software, or a combination of the two. In order to clearly explain this interchangeability of hardware and software, various illustrative components, frames, modules, circuits, and steps are generally described in the form of their functionality. Whether such functionality is implemented as hardware or software depends on the specific application and the design constraints imposed on the overall system. Technicians can realize the described functionality in different ways for each specific application, but such implementation decision should not be interpreted as leading to departure from the scope of the invention.

The various illustrative logic blocks, modules, and circuits described in connection with the embodiments disclosed herein may be general-purpose processors, digital signal processors (DSP), application specific integrated circuits (ASIC), field programmable gate arrays (FPGA) or other programmable logic devices, discrete gate or transistor logic, discrete hardware components, or any combination thereof designed to perform the functions described herein. A general-purpose processor may be a microprocessor, but in an alternative, the processor may be any conventional processor, controller, microcontroller, or state machine. The processor may also be implemented as a combination of computing devices, such as a combination of DSP and microprocessor, a plurality of microprocessors, one or more microprocessors cooperating with the DSP core, or any other such configurations.

The steps of the method or algorithm described in connection with the embodiments disclosed herein may be embodied directly in a hardware, in a software module executed by a processor, or in a combination of the two. The software module may reside in RAM memory, flash memory, ROM memory, EPROM memory, EEPROM memory, register, hard disk, removable disk, CD-ROM, or any other form of storage medium known in the art. An exemplary storage medium is coupled to the processor so that the processor can read and write information from / to the storage medium. In an alternative, the storage medium can be integrated into the processor. The processor and storage medium may reside in an ASIC. The ASIC can reside in a user terminal. In an alternative, the processor and storage medium may reside in a user terminal as discrete components.

In one or more exemplary embodiments, the described functions may be implemented in hardware, software, firmware, or any combination thereof. If implemented as a computer program product in software, each function can be stored on or transmitted through a computer-readable medium as one or more instructions or codes. The computer-readable medium comprises both a computer storage medium and a communication medium, which comprises any medium that facilitates the transfer of computer programs from one place to another. The storage medium can be any available medium that can be accessed by a computer. By way of example and not limitation, such a computer-readable medium may comprise RAM, ROM, EEPROM, CD-ROM or other optical disk storage, magnetic disk storage or other magnetic storage device, or any other medium that can be used to carry or store desired program code in the form of instructions or data structures and can be accessed by a computer. Any connection is also properly referred to as a computer-readable medium. For example, if the software is transmitted from a web site, a server, or other remote source, using coaxial cable, optical fiber cable, twisted pair, digital subscriber line (DSL), or wireless technology such as infrared, radio and microwave, the coaxial cable, optical fiber cable, twisted pair, DSL, or wireless technologies such as infrared, radio and microwave, are comprised in the definition of medium. The disk and disc used herein comprise compact disc (CD), laser disc, optical disc, digital versatile disc (DVD), floppy disk and Blu ray disc, wherein disk often reproduces data magnetically, while disc reproduces data optically with laser. The above combinations shall also be comprised in the scope of computer-readable media.

The previous description is provided to enable any person skilled in the art to practice the various aspects described herein. However, it should be understood that the protection scope of the present invention should be subject to the appended claims and should not be limited to the specific structures and components of the embodiments explained above. Those skilled in the art can make various changes and modifications to various embodiments within the spirit and scope of the present invention, and these changes and modifications also fall within the protection scope of the present invention.

## Claims

1. An anticipated learning method for short-term time series prediction, comprising:
step 1: selecting a variable for prediction from time series data and record it as *x,* and then selecting a data segment with a duration of *tₜᵣₐᵢₙ* from a data set as a training set *data,* wherein corresponding *x*[0: *tₜᵣₐᵢₙ*] is used as a label set to predict a future variable *x*[*tₜᵣₐᵢₙ*: *tₜᵣₐᵢₙ* + *t_{prediction}*] with a duration of *t_{prediction};*
step 2: executing subsequent steps to cyclically process a current predicted point *x*[*tₜᵣₐᵢₙ* + num] , wherein *num* represents a subscript of the variable predicted this time, and an initial value of the *num* is made 0;
step 3: using the training set and the label set to train two neural networks *ϕ*_{1+*num*} and *ϕ*₂₊ₙᵤₘ , wherein the training set *train*₁ of the neural network *ϕ*_{1+*num*} is *data*[1: *tₜᵣₐᵢₙ* - 1], the training set *train*₂ of the neural network *ϕ*_{2+*nnm*} is *data*[0: *tₜᵣₐᵢₙ* - 2], and the label sets *label* of the two neural networks are both *x*[2 + *num: tₜᵣₐᵢₙ*]*,* and obtaining that the trained output of the neural network *ϕ*_{1+*num*} is *output*₁*,* the trained output of the neural network *ϕ*_{2+*num*} is *output*₂*,*and a loss function of the two neural networks is:
*loss function* = *mean square error in self training* + *α* * *(mean square errors of output*₁ *and output*₂*),*
wherein *α* is a hyper parameter;
step 4: performing prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network *ϕ*₂₊ₙᵤₘ, by the two neural networks trained in the step 3 to respectively obtain prediction results *x*_{*prediction*1} and *x*_{*prediction*2}*,* finally taking an average value to get a prediction result of this time *x*[*tₜᵣₐᵢₙ* + *num]* = (*x*_{*prediction*1} + *x*_{*prediction*2}*)*/2*,* adding the prediction result to the end of the label *x[0: tₜᵣₐᵢₙ*] of the training set to obtain x[0: *tₜᵣₐᵢₙ* + num + 1], taking *x*[0: *tₜᵣₐᵢₙ* + *num* + 1] as the label for a next round of training, then making *num* = *num* + 1 and repeating the cyclic processing of the steps 3~4, and jumping out of the loop until *num* = *t_{prediction}* - 1;
step 5: obtaining the prediction value *x*[*tₜᵣₐᵢₙ: tₜᵣₐᵢₙ* + *t_{prediction}*] with the duration of *t_{prediction}* and finishing the prediction, wherein the prediction value *x*[*tₜᵣₐᵢₙ*: *tₜᵣₐᵢₙ* + *t_{prediction}*] with the duration of *t_{prediction}* represents the prediction result of a time series prediction task.

2. The anticipated learning method for short-term time series prediction of claim 1, wherein the data set comprises a synthetic data set and a real data set.

3. The anticipated learning method for short-term time series prediction of claim 1, wherein the two neural networks *ϕ*_{1+*num*} and *ϕ*_{2+*num*} are multilayer simple neural network models with a layer for sampling processing in an input layer.

4. An anticipated learning system for short-term time series prediction, comprising:
a preprocessing module for selecting a variable for prediction from time series data and recording it as *x,* then selecting a data segment with a duration of *tₜᵣₐᵢₙ* from a data set as a training set *data,* wherein corresponding *x*[0: *tₜᵣₐᵢₙ*] is used as a label set to predict a future variable *x*[*tₜᵣₐᵢₙ: tₜᵣₐᵢₙ* + *t_{prediction}*] with a duration of *t_{prediction}* , and executing subsequent steps to cyclically process a current predicted point *x*[*tₜᵣₐᵢₙ* + num] , wherein *num* represents a subscript of the variable predicted this time, and an initial value of the *num* is made 0;
a neural network training module for using the training set and the label set to train two neural networks *ϕ*_{1+*num*} and *ϕ*₂₊ₙᵤₘ, wherein the training set *train*₁ of the neural network *ϕ*_{1+*num*} is *data*[1: *tₜᵣₐᵢₙ* - 1], the training set *train*₂ of the neural network *ϕ*_{2+*num*} is *data*[0: *tₜᵣₐᵢₙ* - 2], and the label sets *label* of the two neural networks are both *x*[2 + *num: tₜᵣₐᵢₙ*]*,* and obtaining that the trained output of the neural network *ϕ*_{1+*num*} is *output*₁*,* the trained output of the neural network *ϕ*₂₊ₙᵤₘ is *output*₂*,*and a loss function of the two neural networks is:
*loss function* = *mean square error in self training* + *α* * *(mean square errors of output*₁ *and output*₂*),*
wherein *α* is a hyper parameter;
a prediction module for performing prediction on two prediction set, comprising a prediction set *data*[*tₜᵣₐᵢₙ* - 1:] of the neural network *ϕ*_{1+*num*} and a prediction set *data*[*tₜᵣₐᵢₙ* - 2:] of the neural network ϕ*₂₊ₙᵤₘ,* by the two neural networks trained in the neural network training module to respectively obtain prediction results *x*_{*prediction*1} and *x*_{*prediction*2}*,* finally taking an average value to get a prediction result of this time *x*[*tₜᵣₐᵢₙ* + num] = (*x*_{*prediction*1} + *x*_{*prediction*2})/2 , adding the prediction result to the end of the label *x*[0: *tₜᵣₐᵢₙ*] of the training set to obtain *x*[0: *tₜᵣₐᵢₙ* + num + 1], taking *x*[0: *tₜᵣₐᵢₙ* + *num* + 1] as the label for a next round of training, then making *num* = *num* + 1 and repeating the cyclic processing of the neural network training module and the prediction module, jumping out of the loop until *num* = *t_{prediction}* - 1, obtaining the prediction value *x*[*tₜᵣₐᵢₙ: tₜᵣₐᵢₙ* + *t_{prediction}*] with the duration of *t_{prediction}* and finishing the prediction, wherein the prediction value *x*[*tₜᵣₐᵢₙ: tₜᵣₐᵢₙ* + *t_{prediction}*] with the duration of *t_{prediction}* represents the prediction result of a time series prediction task.

5. The anticipated learning system for short-term time series prediction of claim 4, wherein the data set comprises a synthetic data set and a real data set.

6. The anticipated learning system for short-term time series prediction of claim 4, wherein the two neural networks *ϕ*_{1+*num*} and *ϕ*_{2+*num*} are multilayer simple neural network models with a layer for sampling processing in an input layer.
